# EUROPEAN PATENT SPECIFICATION

(11) **EP 0 400 135 B1**
(45) Date of publication and mention of the grant of the patent: **23.07.1997**
(21) Application number: 90900611.6
(22) Date of filing: 04.12.1989
(51) Int. Cl.: B29C 45/17

(54) **Injection mold method**
Spritzgiessverfahren
Procédé de moulage par injection

(30) Priority: 05.12.1988 US 279849
(43) Date of publication of application: 05.12.1990
(73) Proprietor: CARROLL, Robert, E., Orlando, FL 32779 (US)
(72) Inventor: CARROLL, Robert, E., Orlando, FL 32779 (US)
(74) Representative: Senior, Alan Murray
(86) International application number: US8905500
(87) International publication number: WO9006220

(56) References cited:
- EP-A- 0 127 961
- EP-A- 0 283 207
- GB-A- 1 556 170
- GB-A- 2 122 130
- GB-A- 2 139 549
- US-A- 3 329 198
- US-A- 3 345 687
- US-A- 4 531 703
- US-A- 4 740 150
- US-A- 4 755 128
- PATENT ABSTRACTS OF JAPAN vol. 4, no. 164 (M-41)(646) 14 November 1980 & JP-A-55 113 539 ( ASAHI DOW K.K. ) 2 September 1980
- PATENT ABSTRACTS OF JAPAN vol. 10, no. 159 (M-486)(2215) 7 June 1986 & JP-A-61 012 312 (HASHIMOTO FORMING KOGYO K.K.) 20 January 1986
- RESEARCH DISCLOSURE. vol. 5, no. 217, May 1982, HAVANT GB pages 135 - 136; J.O.CLARK ET AL.: 'pressure molding an article having a class A surface' page 136, left column, paragraph 1; figure 2
- MACHINE DESIGN. vol. 54, no. 28, 9 December 1982, CLEVELAND US pages 99 - 102; D.R. DREGER: 'The best of two worlds in plastics processing'
- PATENT ABSTRACTS OF JAPAN vol. 9, no. 121 (M-382)(1844) 25 May 1985 & JP-A-60 008 022 ( ICHIKO KOGYO K.K. ) 16 January 1985

## Description

The present invention relates to an injection molding method.

Injection molding machines are used in shaping thermoplastic compositions. The preheating, plasticizing and shaping are all done in the injection molding machine where the thermoplastic is heated and plasticized and injected under pressure into the mold by means of a screwram which forces the material through a nozzle in to the mold. The molds are formed in two or more components which fit together to form a cavity therebetween. The mold is mounted to the injection molding machine and has a fixed portion and a moving portion. The mold has a movable portion which is connected to a moving platen of the molding machine for opening and closing the mold. When the mold is closed, the heated (plasticized) plastic is injected into the cavity, where it is allowed to cool to sufficiently harden the polymer before opening the mold by the moving of the movable portion of the injection mold. The polymer part or parts are then ejected from the mold which has formed an article of manufacture or a portion of an article of manufacture.

The present invention deals with a molding process in which the movable, stationary or both portions of the mold has gas injection ports fitted to each part of the mold to apply a nitrogen or other gas pressure to the one side or both sides of the part being molded during the molding process. The gas entry ports are covered either with a porous metal which is porous to the flow of the nitrogen gas but will block the entry of the more viscous plasticized polymer into the porous metal holes. The ports may also be sealed with poppet valves which are opened under the gas pressure which is applied sometime after the injection of the molten plastic into the mold cavity.

Gas and especially nitrogen has been commonly used in injection molding processes to apply a gas pressure through the injection nozzle for increasing the pressure behind the molten plastic being injected into the mold cavity. US-A-4,295,811 and US-A-4,309,380 show a blow molding process applying the gas into the thermoplastic articles through a porous metal section equipped to the core rod which is inserted into the polymer for expanding the polymer into a mold. These patents teach a different type of molding process from the present invention by using a porous metal for injecting the required air to form the blow molded part.

GB-A-2139549 discloses an injection molding apparatus in which molten plastics material is injected into the mold cavity and pressurised gas at a first pressure is introduced directly into the mass of the plastics material uniformly to expand the plastics material outwardly in all directions and to form a balloon-like part having a hollow interior. Whilst the plastics material is cooling, the interior is maintained at the first pressure and then pressurised gas is introduced into the mold cavity at a second, higher pressure to force the confronting interior surfaces of the non-appearance wall of the hollow part against the appearance wall, thereby locally fusing the two walls together.

According to the present invention there is provided a method of forming an injection molded part having no internal voids, comprising the steps of:
attaching a mold formed by a fixed portion and a movable portion to an injection molding machine;
placing said fixed and movable portions of the mold together to form therebetween a part-defining mold cavity sub-divided by walls into a plurality of isolated mold cavity portions between which isolated mold cavity portions the passage of gas is blocked by said walls, each said isolated mold cavity portion being provided with a gas pressure line;
injecting a predetermined quantity of molten thermoplastics polymer into said mold cavity to at least partially fill each of the isolated mold cavity portions, said predetermined quantity of thermoplastics polymer being of a lesser volume than the volume of said mold cavity;
injecting a gas at a predetermined pressure through said gas pressure lines into each of said isolated mold cavity portions, and not into said polymer, while said polymer is fluid to apply a pressure against one side of the polymer in each said isolated mold cavity portion in an amount sufficient to force the polymer away from its respective gas pressure line and to force the other side of the polymer against the other side of the isolated mold cavity portion;
cooling said thermoplastic polymer in said mold cavity; and
ejecting the part from said mold.

Other features and advantages of the present invention will be apparent from the written description and the drawings in which:
Figure 1 is a sectional view taken through a portion of an injection mold in a closed position in accordance with the method of the present invention;
Figure 2 is a sectional view taken through an injection mold having separate isolated mold portions formed in the mold;
Figure 3 is a sectional view taken through one poppet valve and isolated mold portion in accordance with the method of the present invention;
Figure 4 is a side elevation of an injection mold having isolated mold portions;
Figure 5 is a sectional view of an alternate embodiment of a mold using porous metal covers; and
Figure 6 is a diagrammatic view of a gas supply system.

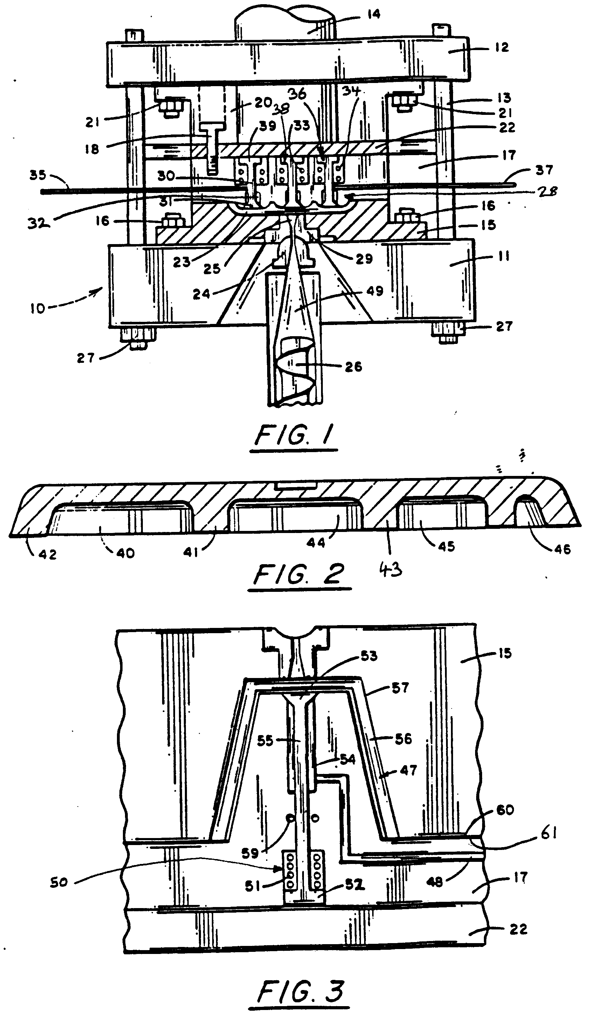

Referring to the drawings and especially to Figure 1, the molding portion of an injection mold and machine 10 has a stationary platen 11 and a moving platen 12 sliding on a plurality of tie bars 13. A clamping ram 14 drives the moving platen 12 to open and close the mold. A fixed mold half 15 is attached to the fixed platen 11 with bolts 16 while a moving mold portion 17 is attached with bolts 18 to mold members 20 which are in turn attached with bolts 21 to the moving platen 12. A steel plate 22 is attached between the attaching members 20 and the moving mold portion 17. When the moving mold portion 17 is driven by the clamping ram 14 to closed the mold cavity as shown in Figure 1, a molding cavity 23 is formed between the mold halves 15 and 17. The fixed platen 11 has a plastic injection nozzle 24 connected to an injection storage space 25 which has the molten plastic or polymer driven by a screw plunger 26 into the cavity 23 of the closed injection mold. A location ring 27 is formed around the opening 29 passing through the mold path 15. Tie bars 13 are held by tie bar nuts 27 to the fixed platen 11.

The movable mold portion 17 has a plurality of poppet valves 28. Each poppet valve has a valve member 30 having the valve element 31 on one end to close a bore 32 entering into the cavity 23 through the movable mold portion. Each valve member 30 has a head portion 39 riding in a cavity 33 and having a spring 34 therein biasing against the head 39 to keep the poppet valve member 30 in a closed position to prevent the entry of a fluid through the valve element 31 and into the cavity 23 and the reverse is also true to keep the injected plastic from going into area 54 of Figure 3. A gas line 35 connects to the side of the bore 32. Similarly, a second poppet valve 36 has a gas line 37 connecting thereto and to a third poppet valve 38. The opening in each poppet valve is connected into an isolated portion of the mold as shown in Figure 2. Each poppet valve 28 is opened by applying pressure in the gas line 35 or 37 until sufficient pressure is reached to overcome the pressure within the closed mold cavity 23 and to overcome the spring bias 33 to allow nitrogen gas to enter into the mold cavity 23 on the opposite side from where the polymer has been injected through the nozzle 24. It should however be clear that the gas can be applied to either or both sides of the mold. Different pressures can be utilized in different gas lines 37 and 35, or alternatively, all of the gas lines can be simultaneously pressurized with the same gas pressure or can be pressurized with different pressures. Each opening of each poppet valve 28 is placed around the mold cavity in isolated sections of the mold which would otherwise be blocked off from the entry of gas. For instance, in Figure 2, a cavity portion 40 might have a cavity wall 41 and the side wall 42 forming an isolated portion 40 while the walls 41 and 43 form an isolated cavity portion 44 and similarly isolated portions 45 and 46 can be formed within the same mold. Each cavity portion with the walls 41 and 43 blocks the gas that enters into the isolated mold portion from passing to the next isolated mold portion.

In operation, the ram 14 opens and closes the mold halves 17 and 15. Once the mold is closed a molten thermoplastic polymer 49 is injected through the nozzle 24 by the operation of the screw ram 26 to drive the polymer into the cavity 23. When the plastic injection, is completed, filling but not packing out the mold, i.e., the mold is 90 to 95% full, and pressure is allowed through directional valve or valves 82 to lines 35 and 37 to open the poppet valves 28 to allow the gas to enter into the cavity 23. The gas forces the polymer against the other side of the mold to provide a large part of uniform strength characteristics as well as one that is easier to remove from the mold once the movable portion of the mold 17 is pulled away to open up the mold halves 15 and 17. An even film of gas under pressure forms an open area on one side of the mold cavity and results in the easy ejection of the part after the molding operation.

In Figure 3, a portion of a mold half 15 has a movable mold portion 17 mounted adjacent thereto enclosing the mold to form a portion of the cavity 47. A gas line 48 is connected through the movable mold portion 17 into a poppet valve 50 having a spring 51 driving against a head 52 to keep the poppet valve element 53 closed. The gas line 48 enters into an enlarged bore area 54 around the stem 55. Sufficient gas pressure is applied to the valve to overcome the spring 52 so that when the pressure is applied against the surface of the valve element 53 it will overcome the pressure in the cavity 47 to allow the gas in the line 48 to pass into the cavity 47. Since a molten plastic 56 has been injected into the cavity mold and gas through the poppet valve has been injected into the other side, the pressurized gas 57 forms a substantially even film of gas across the whole surface of the molding between the mold half 17 and the molten polymer 56 all around the portion of the molded part but blocked where the mold comes together at 60 and 61 to isolate that portion 47 of the cavity. The several poppet valves, as illustrated in Figure 1, are connected directly to each isolated portion of the mold cavity. An O-ring seal 59 seals around each poppet valve stem 55 to seal against the escape of gas thereby.

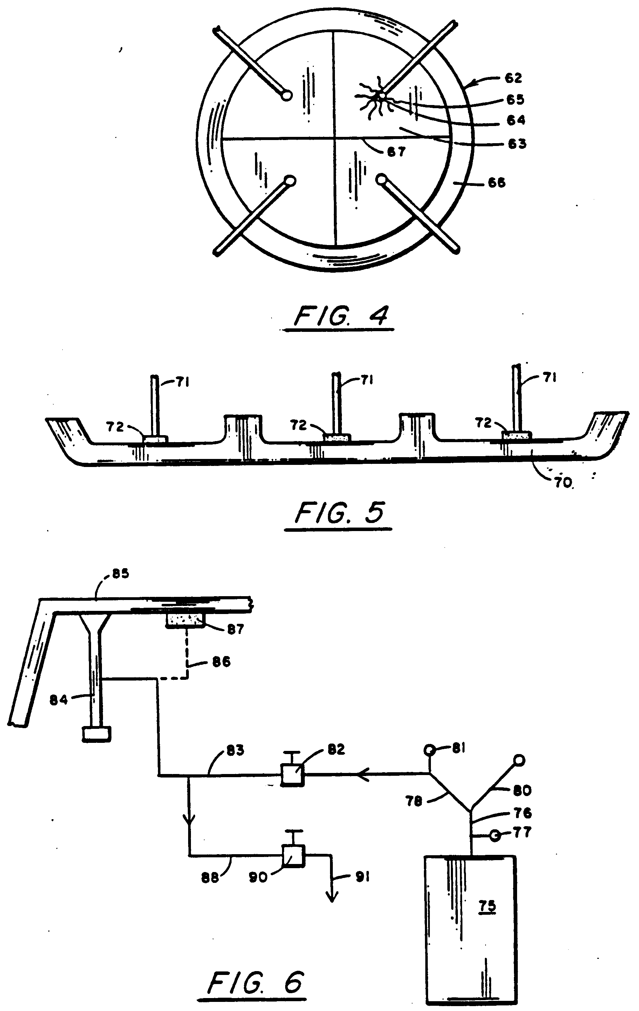

As seen in Figure 4, a mold cavity 62 is divided into four quadrants 63 each having a poppet valve 64 therein for the escape of gas 65 thereinto. A surrounding wall 66 is also formed in the cavity which is broken into four isolated mold portions by the crossing walls 67. It would be clear that this is a simplified elevation of a mold used to illustrate the principal of the present invention.

In Figure 5, a mold cavity 70 is illustrated in a modified embodiment in which a movable portion of a mold cavity has gas lines 71 feeding directly through open bores to the cavity which is covered with a porous metal 72. Thus, a nitrogen gas may be fed through the line 71 and will readily pass through the porous metal cover 72 and into the cavity 70 for each isolated portion of the mold. The molten polymer is a viscous liquid and is blocked by the porous metal 72 from getting into the bore 71.

In operation a predetermined pressure has to be applied to the line 71 at the appropriate synchronized time to apply the gas to each sector of the inside of the mold.

Turning to Figure 6 a diagrammatic view of a mold in accordance with the present invention is illustrated having a tank of nitrogen 75 feeding a gas line 76 through a control valve 77. The gas can be fed through a plurality of lines 78 and 80 to different portions of the mold and may have pressure gages 81 and cut off valves 82. The gas is fed through the line 83 into a poppet valve 84 and into a mold cavity 85. Alternatively, the gas can be fed through a gas line 86 through a porous metal 87 into the mold cavity 85. Each poppet valve or porous valve cover 87 is normally placed within an isolated portion of the mold cavity so that gas is applied to all isolated portions of the mold cavity during the molding process. A gas release line 88 is fed past a valve 90 to vent the gas out the line 91.

A method of forming an injection molded part includes attaching a mold having a cavity formed therein with a fixed mold portion and a movable mold portion to an injection molding machine including the step of attaching at least one gas pressure line to the mold. The method includes injecting a predetermined quantity of melted thermoplastic polymer into the mold in which the predetermined quantity of melted thermoplastic is a lesser volume than the mold cavity. Then injecting a gas, especially a nitrogen gas, under pressure into the mold cavity through at least one gas pressure line while the melted thermoplastic polymer is still fluid, to completely fill the mold cavity under a predetermined pressure to pressurize the thermoplastic polymer. The melted thermoplastic polymer is then cooled to harden the polymer in the mold and the part is then ejected from the mold. In the preferred embodiment, one or more gas pressure lines are attached to the mold and the gas injected under pressure into the mold is injected through the plurality of the gas pressure lines. The step of attaching a plurality of gas pressure lines to the mold can attach the pressure lines through either the fixed or the movable portion of the mold or both but, in the illustrated embodiment, the gas lines are attached to the movable portion of the mold especially to mold portions opening in different isolated cavity portions of the mold. Gas lines may be attached through poppet valves which are spring loaded to open only when a predetermined gas pressure is applied to the gas lines. Alternatively, the gas lines can be attached to the mold adjacent the opening through the mold which has a porous metal cover over each opening into the mold cavity which allows the gas under pressure to be applied to the mold cavity while blocking the melted thermoplastic from entering the gas openings into the mold.

It should be clear at this time that an injection molding method and apparatus has been provided which provides gas or fluid under predetermined pressure to at least one inlet into a mold through either a porous metal cover or a poppet valve to apply the same or different pressures to different isolated portions of the mold. It should however, be clear that the present invention is not intended to be limited to the forms shown which are to be considered illustrative rather than restrictive.

## Claims

1. A method of forming an injection molded part having no internal voids, comprising the steps of:
attaching a mold formed by a fixed portion (15) and a movable portion (17) to an injection molding machine;
placing said fixed and movable portions (15, 17) of the mold together to form therebetween a part-defining mold cavity sub-divided by walls (67) into a plurality of isolated mold cavity portions between which isolated mold cavity portions the passage of gas is blocked by said walls, each said isolated mold cavity portion being provided with a gas pressure line;
injecting a predetermined quantity of molten thermoplastics polymer into said mold cavity (47, 70) to at least partially fill each of the isolated mold cavity portions, said predetermined quantity of thermoplastics polymer being of a lesser volume than the volume of said mold cavity;
injecting a gas at a predetermined pressure through said gas pressure lines into each of said isolated mold cavity portions, and not into said polymer, while said polymer is fluid to apply a pressure against one side of the polymer in each said isolated mold cavity portion in an amount sufficient to force the polymer away from its respective gas pressure line and to force the other side of the polymer against the other side of the isolated mold cavity portion;
cooling said thermoplastic polymer in said mold cavity (47, 70); and
ejecting the part from said mold.

2. A method as claimed in claim 1, wherein the gas pressure lines are attached to said movable mold portion (17).

3. A method as claimed in claim 1 or claim 2, wherein each gas pressure lines is attached to the mold through a poppet valve (28, 50) openable by a predetermined gas pressure in the respective gas line.

4. A method as claimed in claim 1, wherein each gas pressure line is attached to the mold through a porous metal cover (72, 87) opening into a said isolated mold cavity portion.

5. A method as claimed in any of claims 1 to 4, wherein the step of injecting gas into said mold cavity (47, 70) through the gas pressure lines comprises injecting the gas in at least one of said gas pressure lines at a pressure different to that in the other gas pressure lines.

6. A method as claimed in any of claims 1 to 4, wherein the step of injecting gas into said mold cavity (47, 70) through the gas pressure lines comprises injecting the gas under the same gas pressure in each gas pressure line.

7. A method as claimed in any of claims 1 to 6, wherein the step of injecting gas under pressure into said mold is performed after cooling the thermoplastic polymer in said mold cavity (47, 70) to aid in the ejection of the molded part from said mold cavity.

## Patentansprüche

1. Verfahren zum Formen eines Spritzguß-Formteils, das keine inneren Hohlräume aufweist, wobei das Verfahren folgenden Schritte umfaßt:
Anbringen eines Werkzeugs, das aus einem ortsfesten Abschnitt (15) und einem beweglichen Abschnitt (17) gebildet ist, an einer Spritzgießmaschine,
Zusammensetzen des ortsfesten und des beweglichen Abschnitts (15, 17) des Werkzeugs, um zwischen ihnen eine ein Teil begrenzende Werkzeughöhlung zu bilden, die von Wänden (67) in eine Vielzahl von isolierten Werkzeughöhlungsabschnitten unterteilt wird, zwischen denen der Durchfluß von Gas durch diese Wände blockiert ist, wobei jeder isolierte Werkzeughöhlungsabschnitt mit einer Gasdruckleitung versehen ist,
Einspritzen einer vorbestimmten Menge an geschmolzenem thermoplastischem Polymer in diese Werkzeughöhlung (47, 70), um jeden der isolierten Werkzeughöhlungsabschnitte zumindest teilweise zu füllen, wobei die vorbestimmte Menge an thermoplastischem Polymer ein kleineres Volumen einnimmt als das Volumen der Werkzeughöhlung,
Einspritzen eines Gases mit einem vorbestimmten Druck durch die Gasdruckleitungen in jeden der isolierten Werkzeughöhlungsabschnitte und nicht in das Polymer, während das Polymer flüssig ist, um einen Druck an einer Seite des Polymers in jedem der isolierten Werkzeughöhlungsabschnitte in einem Betrag anzulegen, der ausreicht, um das Polymer weg von seiner jeweiligen Gasdruckleitung zu drücken und um die andere Seite des Polymers gegen die andere Seite des isolierten Werkzeughöhlungsabschnitts zu drücken,
Abkühlen des thermoplastischen Polymers in der Werkzeughöhlung (47, 70), und
Ausstoßen des Teils aus dem Werkzeug.

2. Verfahren nach Anspruch 1, bei dem die Gasdruckleitungen an dem beweglichen Werkzeugabschnitt (17) angebracht sind.

3. Verfahren nach Anspruch 1 oder Anspruch 2, bei dem jede Gasdruckleitung an dem Werkzeug durch ein Tellerventil (28, 50 ) angebracht ist, das von einem vorbestimmten Gasdruck in der jeweiligen Gasleitung geöffnet werden kann.

4. Verfahren nach Anspruch 1, bei dem jede Gasdruckleitung an dem Werkzeug durch eine poröse Metallabdeckung (72, 87) angebracht ist, die zu einem der isolierten Werkzeughöhlungsabschnitte führt.

5. Verfahren nach einem der Ansprüche 1 bis 4, bei dem der Schritt des Einspritzens von Gas in die Werkzeughöhlung (47, 70) durch die Gasdruckleitungen das Einspritzen des Gases in mindestens eine der Gasdruckleitungen bei einem Druck umfaßt, der sich von dem Druck in den anderen Gasdruckleitungen unterscheidet.

6. Verfahren nach einem der Ansprüche 1 bis 4, bei dem der Schritt des Einspritzens von Gas in die Werkzeughöhlung (47, 70) durch die Gasdruckleitungen das Einspritzen des Gases bei dem gleichen Gasdruck in jeder Gasdruckleitung umfaßt.

7. Verfahren nach einem der Ansprüche 1 bis 6, bei dem der Schritt des Einspritzens von Gas unter Druck in das Werkzeug durchgeführt wird, nachdem das thermoplastische Polymer in der Werkzeughöhlung (47, 70) abgekühlt ist, um das Ausstoßen des geformten Teils aus der Werkzeughöhlung zu unterstützen.

## Revendications

1. Procédé pour former une pièce moulée par injection ne comportant aucun vide interne, comprenant les étapes consistant à :
fixer un moule formé par une partie fixe (15) et une partie mobile (17) sur une machine de moulage par injection;
placer lesdites parties fixe et mobile (15,17) du moule l'une contre l'autre pour former entre elles une cavité de moule définissant la pièce, divisée par des parois (67) en une pluralité de parties isolées de cavité de moule entre lesquelles le passage du gaz est bloqué par lesdites parois, chacune desdites parties isolées de cavité de moule étant équipée d'une canalisation d'application de pression de gaz;
injecter une quantité prédéterminée de polymère thermoplastique fondu dans ladite cavité de moule (47,70) de manière à remplir au moins partiellement chacune des parties isolées de cavité de moule, ladite quantité prédéterminée de polymère thermoplastique occupant un volume inférieur au volume de ladite cavité de moule;
injecter un gaz à une pression prédéterminée par l'intermédiaire des canalisations d'application de pression de gaz dans chacune desdites parties isolées de cavité de moule et non dans ledit polymère, alors que ledit polymère est fluide, pour appliquer une pression sur un côté du polymère dans chacune desdites parties isolées de cavité de moule avec une intensité suffisante pour refouler le polymère hors de sa canalisation respective d'application de pression de gaz et repousser à force l'autre côté du polymère contre l'autre côté de la partie isolée de cavité de moule;
refroidir ledit polymère thermoplastique dans ladite cavité de moule (47,70); et
éjecter la pièce hors dudit moule.

2. Procédé selon la revendication 1, selon lequel les canalisations d'application de pression de gaz sont raccordées à ladite partie mobile (17) du moule.

3. Procédé selon la revendication 1 ou 2, dans lequel chacune des canalisations d'application de pression de gaz est raccordée au moule par l'intermédiaire d'une soupape à champignon (28,50) pouvant être actionnée par une pression prédéterminée de gaz dans la canalisation de gaz respective.

4. Procédé selon la revendication 1, dans lequel chaque canalisation d'application de pression de gaz est raccordée au moule par l'intermédiaire d'un couvercle métallique poreux (72,87) débouchant dans une desdites parties isolées de cavité de moule.

5. Procédé selon l'une quelconque des revendications 1 à 4, dans lequel l'étape d'injection de gaz dans ladite cavité de moule (47,70) par l'intermédiaire des canalisations d'application de pression de gaz comprend l'injection du gaz dans au moins l'une desdites canalisations d'application de pression de gaz, à une pression différente de celle régnant dans les autres canalisations d'application de pression de gaz.

6. Procédé selon l'une quelconque des revendications 1 à 4, dans lequel l'étape d'injection de gaz dans ladite cavité de moule (47,70) par l'intermédiaire des canalisations d'application de pression de gaz comprend l'injection du gaz à la même pression dans chaque canalisation d'application de pression de gaz.

7. Procédé selon l'une quelconque des revendications 1 à 6, selon lequel l'étape d'injection de gaz sous pression dans ledit moule est exécutée après refroidissement du polymère thermoplastique dans ladite cavité de moule (47,70) pour faciliter l'éjection de la pièce moulée hors de ladite cavité de moule.
